Europäisches Patentamt

European Patent Office

Office européen des brevets

(19)

(11) EP 0 886 371 A1

(12) **EUROPÄISCHE PATENTANMELDUNG**

(43) Veröffentlichungstag:
23.12.1998 Patentblatt 1998/52

(51) Int Cl.6: **H02P 7/62**, H02M 7/48,
H02J 3/01

(21) Anmeldenummer: 98440132.3

(22) Anmeldetag: 17.06.1998

(84) Benannte Vertragsstaaten:
AT BE CH CY DE DK ES FI FR GB GR IE IT LI LU
MC NL PT SE
Benannte Erstreckungsstaaten:
AL LT LV MK RO SI

(30) Priorität: 20.06.1997 DE 19726161

(71) Anmelder: Alcatel Alsthom Compagnie Generale
d'Electricité
75088 Paris (FR)

(72) Erfinder: Hohmuth, Günter
12055 Berlin (DE)

(74) Vertreter: Müller, Joachim, Dipl.-Ing. et al
Alcatel Alsthom
Intellectual Property Department,
Postfach 30 09 29
70449 Stuttgart (DE)

(54) **Verfahren zum Betrieb parallel geschalteter Stromzwischenkreisumrichter zur Speisung eines Asynchronmotors und dazugehörige Schaltungsanordnung**

(57) Es wird ein Stromzwischenkreisumrichter beschrieben, der aus der Parallelschaltung eines ersten Stromzwischenkreisumrichters (6) mit steuerbaren Thyristoren und eines zweiten Stromzwischenkreisumrichters (4) mit abschaltbaren, sog. Gate-turn-off-Thyristoren, besteht. Der Stromzwischenkreisumrichter dient insbesondere zur Speisung eines Antriebes für Pumpen und Lüfter, bei dem im unteren Drehzahlbereich ein überproportional kleines Drehmoment und eine kleine Leistung benötigt wird. Der GTO-Thyristor wird so gesteuert, daß er vornehmlich die Blindleistung für die Asynchronmaschine (5) und die Kommutierungsblindleistung für den Normalthyristor-Stromrichter (6) abzüglich der Blindleistung der Kondensatoren ($C_R$) liefert.

Fig.3

## Beschreibung

Es ist allgemein bekannt, Stromzwischenkreisumrichter zur Speisung elektrischer Maschinen bei variablen Frequenzen von Strom und Spannung einzusetzen. Stromzwischenkreisumrichter bestehen aus einem Netzstromrichter, einem Stromzwischenkreis mit einer Gleichstromglättungsdrossel und einem Maschinenstromrichter. Die Stromrichter sind bevorzugt in Dreiphasen-Brückenschaltung ausgeführt. Durch eine geeignete Regelung und Steuerung wird über den Netzstromrichter der Zwischenkreisstrom eingestellt und konstant gehalten. Über den Maschinenstromrichter wird der Zwischenkreisstrom mit der gewünschten Frequenz auf die Phasen der Maschine verteilt.

Falls die Leistung eines Stromzwischenkreisumrichters für die Speisung einer Maschine nicht ausreicht, ist es an sich bekannt, Stromzwischenkreisumrichter gleicher Bauart parallel zu schalten, vgl. EP 511 344 B1, EP 600 312 B1. Mit den beschriebenen Lösungen wird zwar erreicht, daß bei schnellaufenden Antrieben hoher Leistung auch bei Betriebsfrequenzen über 500 Hz ein nahezu sinusförmiger Verlauf des Motorstromes erreicht wird, sie sind jedoch weniger geeignet für Antriebe, die in einem großen Drehzahlbereich mit unterschiedlichen Anforderungen an das Drehmoment einsatzfähig sein sollen.

Mit der Erfindung soll nun die Aufgabe gelöst werden, einen Stromzwischenkreisumrichter zur Speisung eines Asynchronmotors anzugeben, der insbesondere als Antrieb für Pumpen und Lüfter geeignet ist.

Diese Aufgabe wird durch das im ersten Anspruch angegebene Verfahren und mit der im vierten Anspruch angegebenen Schaltungsanordnung gelöst.

Das Wesen der Erfindung besteht darin, daß der Stromzwischenkreisumrichter aus der Parallelschaltung eines ersten Stromzwischenkreisumrichters und eines zweiten Stromzwischenkreisumrichters besteht, wobei der Maschinenstromrichter des ersten Stromzwischenkreisumrichters mit gesteuerten, nicht löschbaren Thyristoren bestückt ist, im folgenden kurz als Normalthyristor-Stromrichter bezeichnet, und der Maschinenstromrichter des zweiten Stromzwischenkreisumrichters mit steuerbaren, löschbaren Ventilen, beispielsweise abschaltbaren Thyristoren, sog. Gate-turn-off-Thyristoren bestückt ist, im folgenden kurz GTO-Thyristor-Stromrichter bezeichnet. Bei der erfindungsgemäßen Parallelbeschaltung von Normalthyristor-Stromrichter und GTO-Thyristor-Stromrichter wird beim Betrieb der Parallelschaltung die Tatsache vorteilhaft ausgenutzt, daß der Normalthyristor-Stromrichter als induktive Quelle wirkt und der GTO-Thyristor-Stromrichter sowohl als induktive wie auch als kapazitive Quelle wirken kann.

Der Normalthyristor-Stromrichter wird mit dem kleinstmöglichen Wechselrichteranschnittwinkel betrieben, das ist der Anschnittwinkel, der gerade noch eine ausreichende Schonzeit für den vorher leitenden Thyristor sichert, um ein Wiederzünden beim Einsetzen der positiven Spannung zu vermeiden. Der GTO-Thyristor-Stromrichter wird so gesteuert, daß er im wesentlichen die Blindleistung für die Maschine und die Kommutierungsblindleistung für den Normalthyristor-Stromrichter abzüglich der Blindleistung der Kondensatoren liefert.

Die Erfindung wird nunmehr an einem Ausführungsbeispiel erläutert. In der dazugehörigen Zeichnungen zeigen

Fig. 1     eine Schaltungsanordnung für die Parallelschaltung zweier Stromzwischenkreisumrichter nach dem Stand der Technik,

Fig. 2     eine Schaltungsanordnung zur Speisung einer Asynchronmaschine mit einem GTO-Thyristor-Maschinenstromrichter,

Fig. 3     eine Schaltungsanordnung zur Realisierung des erfindungsgemäßen Verfahrens,

Fig. 4     ein Zeigerdiagramm für die Schaltungsanordnung nach Fig. 3 bei Betrieb der Asynchronmaschine im unteren Drehzahlbereich,

Fig. 5     ein Zeigerdiagramm für die Schaltungsanordnung nach Fig. 3 bei Betrieb der Asynchronmaschine im oberen Drehzahlbereich,

Fig. 6     eine Darstellung der Zeitfunktionen der Ströme und Spannung für die Schaltungsanordnung in Fig. 3,

Fig. 7     ein Zeigerbild für die Schaltungsanordnung nach Fig. 3 für unterschiedliche Betriebsfälle der Maschinenstromrichter

Fig. 8     ein Zeigerbild des Stromrichtergesamtstromes im Arbeitsfeld des Normalthyristor-Maschinenstromrichters,

Fig. 9     ein Schaltbild des Stromzwischenkreisumrichters mit R-L-Last,

Fig. 10    eine Darstellung der Zeitfunktionen der Ströme und Spannungen in Fig. 9 bei gesperrtem GTO-Thyristor-Maschinenstromrichter und

Fig. 11    eine Darstellung der Zeitfunktionen der Ströme und Spannungen in Fig. 9, wenn der GTO-Thyristor-Maschinenstromrichter zur Oberschwingungskompensation eingesetzt wird.

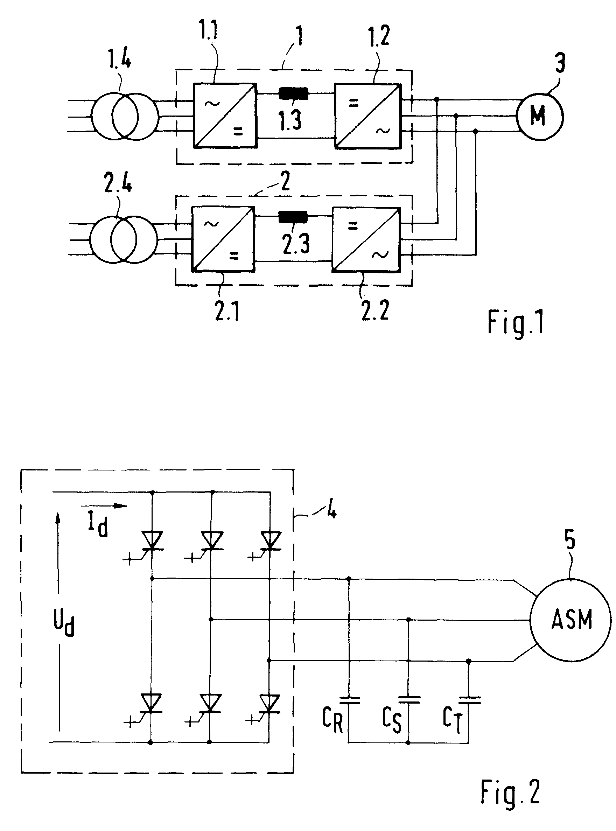

Gemäß Fig. 1 besteht die Parallelschaltung zweier Stromzwischenkreisumrichter aus einem ersten Stromzwischenkreisumrichter 1 und einem zweiten Stromzwischenkreisumrichter 2, die jeweils einen Netzstromrichter 1.1, 2.1, einen Maschinenstromrichter 1.2, 2.2 und eine Gleichstromglättumgsdrossel 1.3, 2.3 enthalten. Der erste und der zweite Stromzwischenkreisumrichter 1, 2 werden über einen ersten Transformator 1.4, beziehungsweise über einen zweiten Transformator 2.4 gespeist. Maschinenseitig sind die beiden Stromzwischenkreisumrichter 1, 2 parallel geschaltet und speisen so die Maschine 3.

Wenn eine Synchronmaschine betrieben werden soll, können im Netzstromrichter und im Maschinenstromrichter Normalthyristoren eingesetzt werden und die Kommutierung erfolgt auf natürliche Weise. Wenn gemäß Fig. 2 eine Asynchronmaschine 5 gespeist werden soll, muß die Kommutierung im Maschinenstromrichter 4 durch Kondensatorentladung erzwungen werden, oder es werden gemäß Fig. 2 im Maschinenstromrichter 4 abschaltbare Thyristoren, sogenannte GTO-Thyristoren, eingesetzt. Damit die GTO-Thyristoren in einem Stromzwischenkreisumrichter schalten können, müssen an den Wechselspannungsanschlüssen des Maschinenstromrichters 4 Kondensatoren $C_R$, $C_S$, $C_T$ angeschlossen werden. Diese Kondensatoren $C_R$, $C_S$, $C_T$ bilden mit den Streuinduktivitäten der Asynchronmaschine 5 Schwingkreise und müssen deshalb so bemessen werden, daß die sich ergebende Resonanzfrequenz weit genug von der Grundschwingungsfrequenz und den Pulsfrequenzen des Maschinenstromrichters 4 entfernt ist.

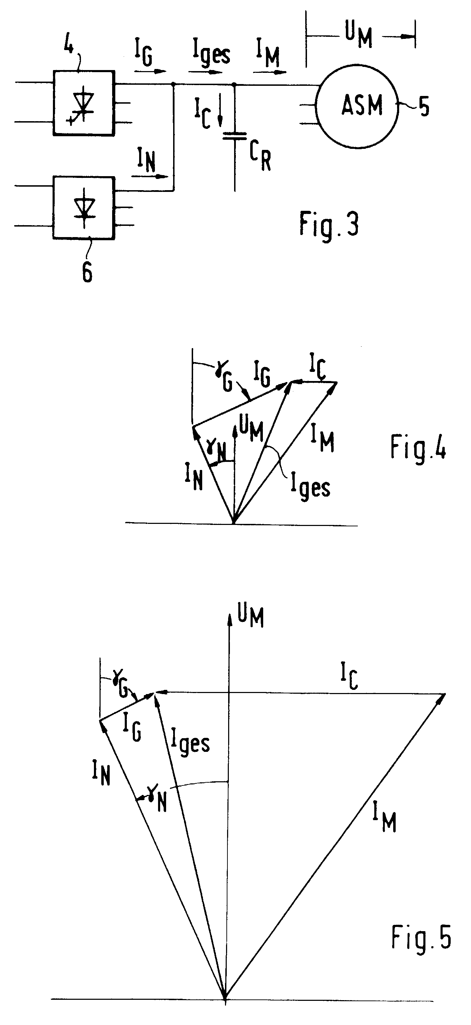

Da Hochleistungs-GTO-Thyristoren nur mit einer relativ kleinen Schaltfrequenz betrieben werden können, sind die Oberschwingungsfrequenzen ebenfalls klein. Die sich aus den Kondensatoren $C_R$, $C_S$, $C_T$ und den Streuinduktivitäten der Asynchronmaschine 5 ergebende Resonanzfrequenz muß durch entsprechende Dimensionierung der Kondensatoren $C_R$, $C_S$, $C_T$ unter die kleinste Oberschwinungsfrequenz gelegt werden. Über die Kondensatoren $C_R$, $C_S$, $C_T$, die sich aus dieser Forderung ergeben, fließt bei der höchsten Maschinenspannung UM und der größten Frequenz ein Grundschwingungsstrom, der in der Größenordnung des Maschinenstroms $I_M$ liegt. Der Kondensatorstrom $I_C$ wirkt dem Blindstrom der Maschine entgegen und kann ihn soweit kompensieren, daß der Gesamtstrom $I_{ges}$ kapazitiv wird, siehe Fig. 5.

In den Anwendungsfällen, in denen die Maschine zum Antrieb von Pumpen oder Lüftern eingesetzt wird, ist im unteren Drehzahlbereich ein überproportional kleines Drehmoment und eine entsprechend kleine Leistung erforderlich, die von einem Stromrichter mit geringer Leistungsfähigkeit bereitgestellt werden kann.

Fig. 3 zeigt die wechselstromseitige Parallelschaltung eines Normalthyristor-Maschinenstromrichters 6 mit einem GTO-Thyristor-Maschinenstromrichter 4, die gemeinsam eine Asynchronmaschine 5 speisen. Der Übersichtlichkeit halber ist nur eine Phase des Dreiphasensystems dargestellt. Der Gesamtstrom $I_{ges}$ des Stromzwischenkreisumrichters setzt sich aus dem Strom $I_G$ des GTO-Thyristor-Maschinenstromrichters 4 und dem Strom $I_N$ des Normalthyristor-Maschinenstromrichters 6 zusammen. Dieser Gesamtstrom $I_{ges}$ verzweigt sich in den Maschinenstrom $I_M$ und den Kondensatorstrom $I_C$ für den Kondensator $C_R$. Der Maschinenstrom $I_M$ ruft an der Asynchronmaschine 5 die Maschinenspannung $U_M$ hervor.

In den Fig. 4 und 5 sind Zeigerdiagramme der Ströme in Bezug zur Maschinenspannung $U_M$ für unterschiedliche Betriebszustände der in Fig. 3 gezeigten Schaltungsanordnung dargestellt. Die Bezeichnungen entsprechen denen in Fig. 3, der Wechselrichteranschnittwinkel des GTO-Thyristor-Maschinenstromrichters 4 ist mit $\gamma_G$ bezeichnet, der Wechselrichteranschnittwinkel des Normalthyristor-Maschinenstromrichters 6 ist mit $\gamma_N$ bezeichnet. In den beiden Betriebszuständen gemäß Fig. 4 und 5 arbeitet der Normalthyristor-Maschinenstromrichter 6 in Wechselrichterendlage, siehe Stromzeiger $I_N$ und Wechselrichteranschnittwinkel $\gamma_N$. Der GTO-Thyristor-Maschinenstromrichter 4 wird in beiden Betriebszuständen so gesteuert, daß er als kapazitive Quelle wirkt, siehe Stromzeiger $I_G$. Fig. 4 und Fig. 5 zeigen Betriebszustände wie sie typisch für Antriebe von Pumpen und Lüftern sind.

Fig. 4 zeigt das Verhalten im unteren Drehzahlbereich bei entsprechend geringer Frequenz und bei einem kleinen Drehmoment mit entsprechend kleiner Maschinenspannung $U_M$. In diesem Betriebszustand ist der Kondensatorstrom $I_C$ auf Grund der geringen Frequenz sehr klein, so daß der Stromrichtergesamtstrom $I_{ges}$ induktiv wird und somit der ausschließliche Einsatz von Normalthyristor-Maschinenstromrichtern nicht möglich ist.

Fig. 5 zeigt ein Zeigerdiagramm für eine hohe Frequenz, ein großes Drehmoment und eine große Maschinenspannung $U_M$. Der Stromrichtergesamtstrom $I_{ges}$ ist zwar kapazitiv, liegt jedoch oberhalb der Kippgrenze eines Normalthyristor-Maschinenstromrichters, so daß auch in diesem Fall eine Stromkomponente $I_G$ von dem GTO-Thyristor-Maschinenstromrichters 4 geliefert werden muß.

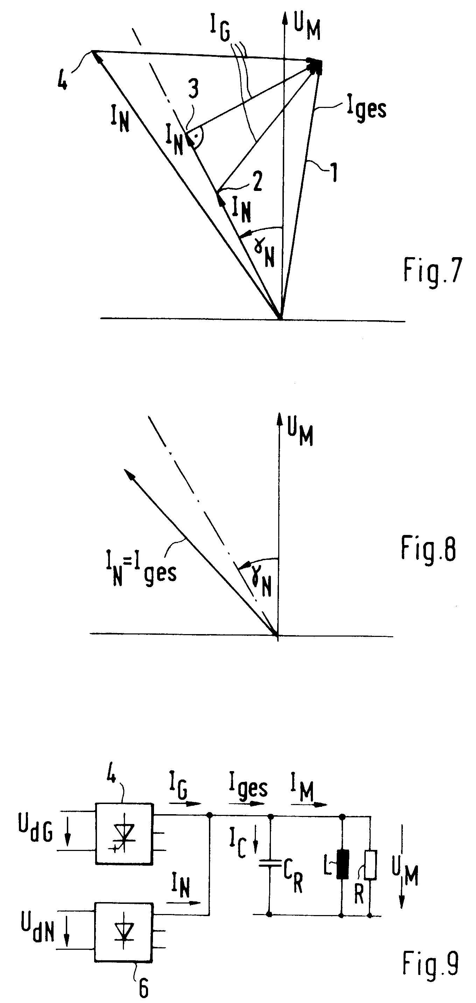

In Fig. 7 werden Möglichkeiten dargestellt, wie der Stromrichtergesamtstrom $I_{ges}$ auf den Normalthyristor-Maschinenstromrichter 6 und den GTO-Thyristor-Maschinenstromrichter 4 gemäß folgender Gleichung aufgeteilt werden kann:

$$\underline{I}_{ges} = \underline{I}_N + \underline{I}_G$$
$$= \underline{I}_M + \underline{I}_C$$

In Fig. 7 sind folgende Beispiele dargestellt:

1. $I_G = I_{ges}$    $I_N = 0$
Der Normalthyristor-Maschinenstromrichter 6 ist gesperrt, der GTO-Thyristor-Maschinenstromrichter 4 liefert den Stromrichtergesamtstrom $I_{ges}$. Dieser Betriebsfall tritt beispielsweise bei geringer Drehzahl und geringem Drehmoment der Asynchronmaschine 5 auf.

2. $I_N > 0$      $I_G > 0$

Beide Maschinenstromrichter 4,6 liefern einen Strom; der Normalthyristor-Maschinenstromrichter 6 arbeitet in Wechselrichterendlage, siehe Wechselrichteranschnittwinkel $\gamma_N$.

Für die Stromverteilung sind folgende Kriterien möglich:

a) Der Strom $I_N$ des Normalthyristor-Maschinenstromrichters 6 ist von der Drehzahl n abhängig, beispielsweise

$$I_N = 0 \qquad \text{für } n \leq n_o$$

$$I_N = A\,(n-n_o) \qquad \text{für } n \geq n_o$$

A =     Proportionalitätsfaktor
$n_o$ =     Minimaldrehzahl für Normalthyristor-Maschinenstromrichterbetrieb

b) Optimierung bezüglich des Wirkungsgrades der beiden Maschinenstromrichter.

3. Phasenverschiebung zwischen den Strömen $I_G$ und $I_N$ der beiden

Maschinenstromrichter 4, 6 beträgt $\varphi = 90°$. Der Normalthyristor-Maschinenstromrichter 6 arbeitet in Wechselrichterendlage, der Strom $I_G$ des GTO-Thyristor-Maschinenstromrichters 4 durchläuft ein Minimum.

4. Technisch unsinnige Stromaufteilung.

Der Normalthyristor-Maschinenstromrichter 6 arbeitet mit einem Wechselrichteranschnittwinkel, der größer ist als der notwendige Wechselrichteranschnittwinkel $\gamma_N$. Damit wird von diesem Maschinenstromrichter 6 mehr Blindleistung als notwendig erzeugt. Diese Blindleistung muß vom GTO-Thyristor-Maschinenstromrichter 4 kompensiert werden. Darüberhinaus gibt der Normalthyristor-Maschinenstromrichter 6 mehr Wirkstrom ab als benötigt wird. Der GTO-Thyristor-Maschinenstromrichter 4 arbeitet deshalb im Gleichrichterbetrieb und speist den Wirkleistungsüberschuß in seinen Stromzwischenkreis zurück.

Durch die Parallelschaltung von dem Normalthyristor-Maschinenstromrichter 6 und dem GTO-Thyristor-Maschinenstromrichter 4 werden mehrere Vorteile erzielt.

Da der Normalthyristor-Maschinenstromrichter 6 nur im 120°-Blockbetrieb arbeitet, werden von ihm Stromoberschwingungen der 5fachen, 7fachen, 11fachen usw. Grundfrequenz erzeugt. Um Resonanzen auszuschließen, darf der Normalthyristor-Maschinenstromrichter 6 erst in Betrieb gesetzt werden, wenn die Frequenz der fünften Oberschwingung deutlich, d. h. etwa um den Faktor 1,5, oberhalb der Resonanzfrequenz aus Kondensator $C_R$, $C_S$, $C_T$ und Streuinduktivität der Asynchronmaschine 5 liegt.

Der GTO-Thyristor-Stromrichter 4 dagegen kann im Mehrfach-Pulsbetrieb so gesteuert werden, daß störende Oberschwingungsfrequenzen nicht auftreten. Der Parallelbetrieb berücksichtigt auch, daß der GTO-Thyristor-Maschinenstromrichter 4 geringer belastbar ist als der Normalthyristor-Maschinenstromrichter 6 und er deshalb vorteilhafterweise, wie in Fig. 4 dargestellt, im unteren Drehzahlbereich und bei geringem Drehmoment eingesetzt wird.

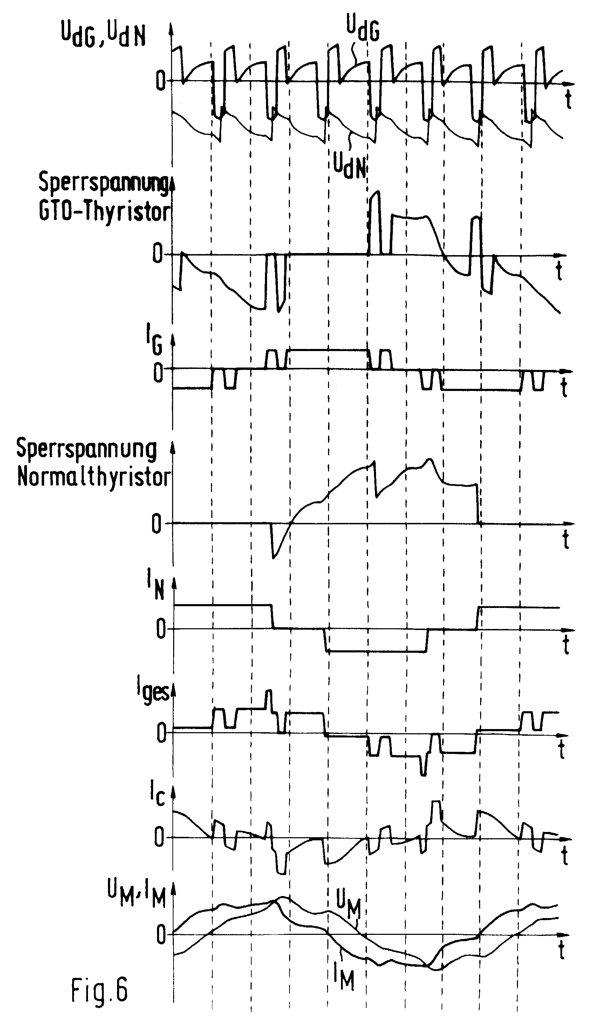

In Fig. 6 sind die Oszillogramme der Strom- und Spannungsverläufe der erfindungsgemäßen Schaltungsanordnung, die in Fig. 3 dargestellt ist, aufgezeichnet. Aus dieser Darstellung ist aus $i_G = f\,(t)$ zu entnehmen, daß der GTO-Tyristor-Maschinenstromrichter mit dreifacher Grundschwingungsfrequenz gepulst wird. Es ist dargestellt, daß der GTO-Tyristor nach dem Abschalten für einige Zeitabschnitte positive Sperrspannung aufnehmen muß, während der Normalthyristor nur mit negativer Sperrspannung abschaltet. Somit werden beide Schaltelemente ihren Charakteristiken gemäß eingesetzt.

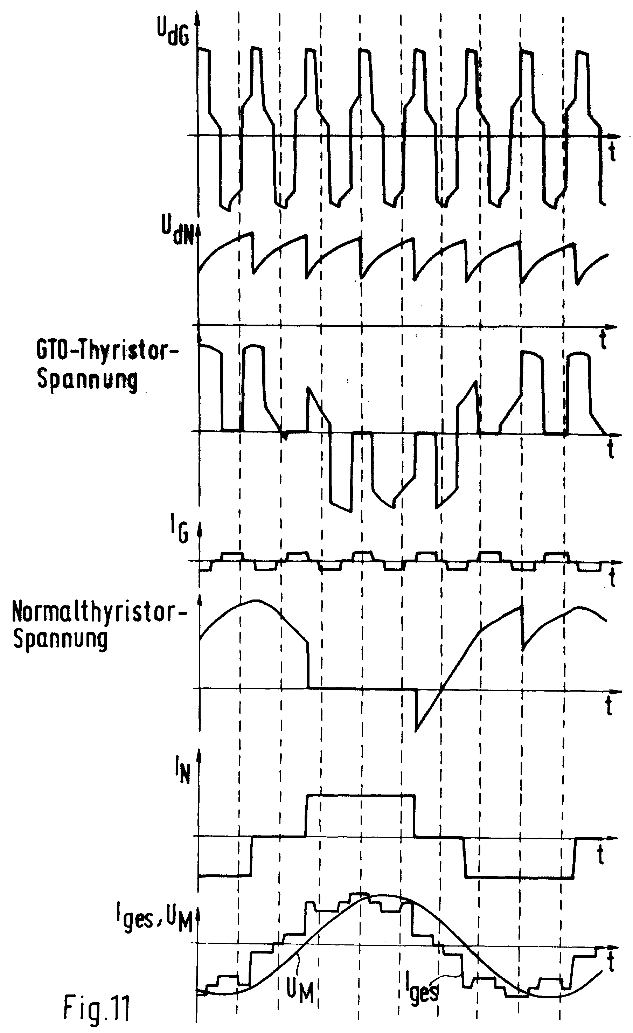

In dem Fall, daß die Phase des Stromrichtergesamtstromes $I_{ges}$ gegenüber der Maschinenspannung UM größer als der kleinstzulässige Wechselrichteranschnittwinkel $\gamma_N$ ist, wird der GTO-Thyristor-Maschinenstromrichter 4 für die Speisung der Asynchronmaschine 5 nicht mehr benötigt. Das entsprechende Zeigerbild ist in Fig. 8 dargestellt. Der GTO-Thyristor-Maschinenstromrichter 4 kann dann dazu eingesetzt werden, die vom Normalthyristor-Maschinenstromrichter 6 erzeugte fünfte Oberschwingung des Stromrichtergesamtstromes $I_{ges}$ zu kompensieren. Dazu muß der GTO-Thyristor-Maschinenstromrichter 4 die in Fig. 11 dargestellte Stromfunktion $i_G = f\,(t)$ liefern.

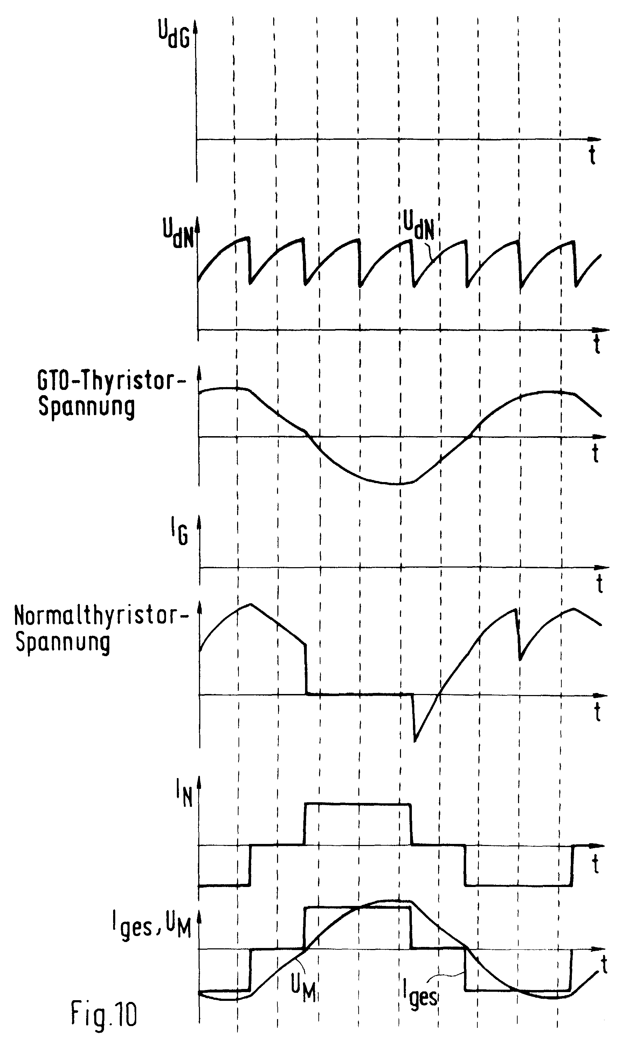

Wird von dem Stromzwischenkreisumrichter eine R-L-Last gespeist, wie in Fig. 9 dargestellt, so ergeben sich für die in Fig. 9 eingezeichneten Ströme und Spannungen die in den Fig. 10 und 11 dargestellten Zeitfunktionen.

Fig. 10 zeigt die Zeitfunktionen für den Fall, daß der GTO-Thyristor-Maschinenstromrichter 4 gesperrt ist. In Fig. 10 unten sind die Rechteck-Stromblöcke der Zeitfunktion $i_{ges} = f\,(t)$ des Stromrichtergesamtstromes dargestellt.

Fig. 11 zeigt die Zeitfunktionen für den Fall, daß der GTO-Thyristor-Maschinenstromrichter 4 zur Oberschwingungskompensation eingesetzt wird. Die Wirkung der Kompensation ist deutlich in Fig. 11 unten an der Zeitfunktion $i_{ges} = f(t)$ des Stromrichtergesamtstromes zu erkennen. Diese Zeitfunktion nähert sich dem sinusförmigen Verlauf an.

**Patentansprüche**

1. Verfahren zum Betrieb parallel geschalteter Stromzwischenkreisumrichter zur Speisung einer Asynchronmaschine (5), insbesondere für den Antrieb von Pumpen und Lüftern, bei Anwendung des Prinzips der feldorientierten Steuerung, **dadurch gekennzeichnet,** daß ein erster mit gesteuerten, nicht löschbaren Ventilen bestückter Stromzwischenkreisumrichter und ein zweiter mit gesteuerten, löschbaren Ventilen bestückter Stromzwischenkreisumrichter maschinenstromseitig parallel geschaltet werden, daß der mit gesteuerten, löschbaren Ventilen bestückte Stromzwischenkreisumrichter so gesteuert wird, daß von diesem die Blindleistung für die Asynchronmaschine (5) und die Kommutierungsblindleistung für den mit gesteuerten, nicht löschbaren Ventilen bestückten Stromzwischenkreisumrichter abzüglich der Blindleistung der Kommutierungskondensatoren ($C_R$, $C_S$, $C_T$) geliefert wird.

2. Verfahren nach Anspruch 1, dadurch gekennzeichnet, daß bei kleiner Drehzahl der Asynchronmaschine (5) und kleinem erforderlichen Drehmoment der mit gesteuerten, löschbaren Ventilen bestückte Stromzwischenkreisumrichter so gesteuert wird, daß der Gesamtstrom ($I_{ges}$) des Stromzwischenkreisumrichters eine kapazitive Komponente hat.

3. Verfahren nach Anspruch 1, dadurch gekennzeichnet, daß in dem Betriebszustand, in dem der Gesamtstrom ($I_{ges}$) des Stromzwischenkreisumrichters nur von dem ersten mit gesteuerten, nicht löschbaren Ventilen bestückten Stromzwischenkreisumrichter geliefert wird, der zweite mit gesteuerten, löschbaren Ventilen bestückte Stromzwischenkreisumrichter zur Kompensation der vom ersten Stromzwischenkreisumrichter verursachten Oberschwingungen eingesetzt wird.

4. Schaltungsanordnung zur Durchführung des Verfahrens mit einem Stromzwischenkreisumrichter (1, 2), der aus einem Netzstromrichter (1.1, 2.1) aus einem Stromzwischenkreis mit einer Gleichstromglättungsdrossel (1.3, 2.3) und einem Maschinenstromrichter (1.2, 2.2) besteht, dadurch gekennzeichnet, daß die wechselstromseitigen Ausgänge eines ersten mit gesteuerten, nicht löschbaren Ventilen bestückten Maschinenstromrichters (1.2) mit den wechselstromseitigen Ausgängen eines zweiten mit gesteuerten, löschbaren Ventilen bestückten Maschinenstromrichters (2.2) miteinander verbunden sind und an die Anschlüsse einer Asynchronmaschine (5) geschaltet sind.

Fig.1

Fig.2

Fig.3

Fig.4

Fig.5

7

Fig.6

Fig.7

Fig.8

Fig.9

Fig.10

EP 0 886 371 A1

$U_{dG}$

$U_{dN}$

GTO-Thyristor-Spannung

$I_G$

Normalthyristor-Spannung

$I_N$

$I_{ges}, U_M$

$U_M$   $I_{ges}$

Fig.11

11

Europäisches
Patentamt

**EUROPÄISCHER RECHERCHENBERICHT**

Nummer der Anmeldung

EP 98 44 0132

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| Y | DE 22 01 948 A (MESSERSCHMITT BOELKOW BLOHM) 19. Juli 1973<br>* Seite 2, Absatz 3 - Seite 3, Absatz 1 *<br>* Seite 5, letzter Absatz - Seite 6, Absatz 1 *<br>---- | 1,4 | H02P7/62<br>H02M7/48<br>H02J3/01 |
| Y | DE 37 25 515 A (LICENTIA GMBH) 9. Februar 1989<br>* Anspruch 1; Abbildung 1 *<br>--- | 1,4 | |
| A | US 4 736 148 A (HIRATA AKIO) 5. April 1988<br>* Spalte 5, Zeile 50 - Spalte 6, Zeile 5; Abbildung 8 *<br>--- | 1,4 | |
| A | US 4 553 197 A (STEMMLER HERBERT) 12. November 1985<br>* Spalte 6, Zeile 65 - Spalte 7, Zeile 9; Abbildung 5 *<br>--- | 1,4 | |
| A | PATENT ABSTRACTS OF JAPAN vol. 010, no. 302 (E-445), 15. Oktober 1986<br>& JP 61 116996 A (TOSHIBA CORP), 4. Juni 1986<br>* Zusammenfassung *<br>--- | 1 | RECHERCHIERTE SACHGEBIETE (Int.Cl.6)<br>H02P<br>H02M<br>H02J |
| A | EP 0 542 507 A (TOKYO SHIBAURA ELECTRIC CO) 19. Mai 1993<br>* Spalte 2, Zeile 16 - Zeile 24; Anspruch 1 *<br>---<br>-/-- | 1,3,4 | |

Der vorliegende Recherchenbericht wurde für alle Patentansprüche erstellt

| Recherchenort | Abschlußdatum der Recherche | Prüfer |
|---|---|---|
| DEN HAAG | 25. September 1998 | Bourbon, R |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**Europäisches Patentamt**

**EUROPÄISCHER RECHERCHENBERICHT**

Nummer der Anmeldung

EP 98 44 0132

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | LASSETER R H ET AL: "POWER CONDITIONING SYSTEMS FOR SUPERCONDUCTIVE MAGNETIC ENERGY STORAGE"<br>1. September 1991 , IEEE TRANSACTIONS ON ENERGY CONVERSION, VOL. 6, NR. 3, PAGE(S) 381 - 387 XP000259646<br>* Seite 382, linke Spalte, Absatz 4 - Seite 384; Abbildungen 6,7 * | 1,4 | |

RECHERCHIERTE SACHGEBIETE (Int.Cl.6)

Der vorliegende Recherchenbericht wurde für alle Patentansprüche erstellt

| Recherchenort | Abschlußdatum der Recherche | Prüfer |
|---|---|---|
| DEN HAAG | 25. September 1998 | Bourbon, R |